# EUROPÄISCHE PATENTSCHRIFT

(11) **EP 4 269 847 B1**
(45) Veröffentlichungstag und Bekanntmachung des Hinweises auf die Patenterteilung: **09.04.2025**
(21) Anmeldenummer: 23168107.3
(22) Anmeldetag: 14.04.2023
(51) Int. Cl.: F16K 11/074, F16K 27/04, F16K 11/065, C02F 1/44, F16K 37/00

(54) **MOBILE WASSERAUFBEREITUNGSANLAGE MIT EINEM ERSTEN UND EINEM ZWEITEN UMKEHROSMOSEMODUL UND MIT EINEM UMSCHALTVENTIL**
MOBILE WATER TREATMENT SYSTEM WITH A FIRST AND A SECOND REVERSE OSMOSIS MODULE AND WITH A SWITCHING VALVE
INSTALLATION MOBILE DE TRAITEMENT DE L'EAU AVEC UN PREMIER ET UN DEUXIEME MODULE D'OSMOSE INVERSE ET AVEC UNE VANNE DE COMMUTATION

(30) Priorität: 29.04.2022 DE 102022110478
(43) Veröffentlichungstag der Anmeldung: 01.11.2023
(73) Patentinhaber: Kärcher Futuretech GmbH, 71409 Schwaikheim (DE)
(72) Erfinder: Weible, Frank, 71364 Winnenden (DE); Hermann, Axel, 71364 Winnenden (DE)
(74) Vertreter: Witte, Weller & Partner Patentanwälte mbB

(56) Entgegenhaltungen:
- WO-A1-2016/057764
- CN-U- 205 155 248
- DE-A1- 102007 037 883
- DE-A1- 102007 059 651
- DE-A1- 102010 042 265
- DE-A1- 102011 088 678
- US-A- 2 209 992
- US-A- 3 640 310
- US-A- 5 944 299

## Beschreibung

Die vorliegende Erfindung betrifft eine mobile Wasseraufbereitungsanlage zum Erzeugen von Trinkwasser in einem Katastrophengebiet mit einem Umschaltventil zum Umschalten zwischen einem permeatgestuften Betrieb und einem konzentratgestuften Betrieb einer mehrstufigen Umkehrosmoseanlage.

Es gibt mobile Wasseraufbereitungsanlagen für Einsätze in Katastrophengebieten, etwa nach einem Erdbeben oder einer Überschwemmung. EP 1 690 579 A1 beschreibt beispielsweise eine Filteranordnung und ein Verfahren, die sich zur Vorreinigung von Wasser aus Flüssen, Seen oder Meeren bei einer mobilen Trinkwasseraufbereitungsanlage eignen. Die Filteranordnung liefert ein Filtrat, mit dem eine Umkehrosmoseanlage zur Trinkwassererzeugung gespeist werden kann. Auch EP 1 690 579 A1 beschreibt eine Anlage mit drei Filtereinheiten, die zeitgleich oder wechselweise verwendet werden können, um schmutziges Rohwasser als Vorstufe für eine nachfolgende Umkehrosmoseanlage zu filtern. Die Umkehrosmoseanlage ermöglicht die Gewinnung von keimfreiem Trinkwasser einschließlich der Entsalzung und/oder Entfernung von gelösten Schadstoffen wie Schwermetallen etc. WO 2016/057764 A1 offenbart eine Wasseraufbereitungsanlage.

Umkehrosmoseanlage werden üblicherweise im sogenannten Cross Flow betrieben. Dabei wird das ggf. vorgefilterte Rohwasser unter einem gewissen Druck einer semipermeablen Membran zugeführt. Ein Teil des zugeführten Rohwassers diffundiert aufgrund der Druckdifferenz durch die Membran und bildet einen ersten ausgangsseitigen Teilstrom, das sogenannte Permeat. Der nicht durch die Membran diffundierende Teil des zugeführten Rohwassers, das sogenannte Konzentrat oder Retentat, bildet einen zweiten ausgangsseitigen Teilstrom. Permeat ist also das Wasser, das die Membranfläche passiert hat. Konzentrat/Retentat ist der Anteil, der die Membranfläche nicht passiert hat und als eine Art Abwasser die zurückgehaltenen, konzentrierten Stoffe von dem Membranelement abführt.

Zur Erhöhung der Permeatmenge werden üblicherweise eine Vielzahl von Membranelementen kombiniert und zu mehrstufigen Membranblöcken verbunden. Dabei spricht man von einer "Konzentratstufung", wenn der aus einem ersten Membranelement austretende Konzentratstrom als Rohwasser (Feed) einem nachfolgenden weiteren Membranelement zugeführt wird. Das aus den einzelnen Membranstufen austretende Permeat wird in einer gemeinsamen Leitung gesammelt und abgeführt.

Wenn nicht eine große Menge an Permeat benötigt wird, sondern vor allem eine höhere Wasserqualität, d.h. reineres Permeat gewünscht wird, werden mehrere Membranelemente mit einer "Permeatstufung" verbunden. In diesem Fall wird der aus einem ersten Membranelement austretende Permeatstrom als Rohwasser (Feed) einem oder mehreren weiteren Membranelementen zugeführt. Das aus dem weiteren Membranelement austretende Permeat hat somit mehrfach eine Membranfläche passiert. In diesem Fall wird das Konzentrat aus der ersten Membranstufe und das Konzentrat aus der zweiten Membranstufe in einer gemeinsamen Leitung gesammelt und abgeführt oder dem Eingang der Umkehrosmoseanlage erneut als Rohwasser für eine weitere Aufbereitung zugeführt.

Stationäre Großanlagen werden üblicherweise für eine konkrete Anforderung gebaut und somit entweder konzentratgestuft oder permeatgestuft ausgeführt. Bei mobilen Umkehrosmoseanlagen ist die Rohwasserbeschaffenheit in der Regel unbekannt und es ist daher nicht von vornherein klar, ob für die Erreichung der geforderten Permeatqualität ein einmaliges Passieren einer Membranfläche ausreicht oder ob ein mehrfaches Passieren erforderlich ist. Daher ist es wünschenswert, eine mobile Wasseraufbereitungsanlage mit einer mehrstufigen Umkehrosmoseanlage so auszubilden, dass vor Ort zwischen einem konzentratgestuften oder einem permeatgestuften Betrieb gewechselt werden kann. Da mobile Systeme häufig in Krisensituationen mit wechselnden Randbedingungen eingesetzt werden, ist zudem ein einfacher und schneller, aber auch prozesssicherer Wechsel zwischen den genannten Betriebsarten wünschenswert.

Grundsätzlich besteht bei einer Permeatstufung die Möglichkeit, das Permeat aus der ersten Stufe nahezu drucklos austreten zu lassen und den notwendigen Prozessdruck für die zweite Stufe über eine nachfolgende, weitere Druckerhöhungspumpe zu erzeugen. Bei mobilen Anlagen ist aber die Baugröße und das Gewicht von Bedeutung, sodass es wünschenswert ist, die Anzahl und Größe der verwendeten Komponenten zu reduzieren. Dies hat zur Folge, dass das Permeat aus der ersten Stufe bei permeatgestuftem Betrieb ohne Zusatzpumpe unter einem gewissen Druck stehen muss und somit nicht nur die Ventile im Konzentratbereich, sondern auch die Ventile im Bereich des Permeats hohen Betriebsdrücken standhalten müssen.

Handelsübliche Kugelhähne sind hierfür häufig ungeeignet, da diejenigen Kugelhähne, die über eine Trinkwasserzulassung verfügen, nur geringen Prozessdrücken standhalten und verfügbare Hochdruckkugelhähne in der Regel keine Trinkwasserzulassung haben.

Darüber hinaus ist es im Hinblick auf die Prozesssicherheit und Permeatqualität von großer Bedeutung, dass eine Kontamination des Permeats durch ungewollte Leckagen an Absperrventilen vermieden werden kann. In dieser Hinsicht sind einfache Kugelhähne nachteilig, da man eine Leckage von außen nicht ohne Weiteres erkennen kann.

Schließlich müssen bei Anlagen, bei denen das erzeugte Permeat als Trinkwasser genutzt werden soll, alle Ventile und alle sonstigen Bauteile, die in irgendeiner Betriebsart mit dem abzugebenden Permeat in Berührung kommen können, trinkwassergeeignet sein und dürfen die Trinkwasserqualität nicht nachteilig beeinflussen.

DE 10 2010 042 265 A1 offenbart ein Ventil für verschiedene Anwendungen, jedoch ohne einen Hinweis auf eine Wasseraufbereitungsanlage. Das bekannte Ventil besitzt ein erstes Ventilelement und ein zweites Ventilelement, Das erste Ventilelement umfasst ein erstes Trägerteil aus Kunststoff und ein erstes Flächenelement aus Silizium oder Siliziumoxid, das an dem ersten Trägerteil befestigt ist. Das zweite Ventilelement umfasst ein zweites Trägerteil aus Kunststoff und ein zweites Flächenelement aus Silizium oder Siliziumoxid, das an dem zweiten Trägerteil befestigt ist. Die Ventilelemente sind so angeordnet, dass das erste und das zweite Flächenelement entlang einer Anlagefläche zumindest teilweise flächig aneinander anliegen, wobei die Ventilelemente in wenigstens einer Richtung parallel zu der Anlagefläche der Flächenelemente relativ zueinander bewegbar sind. Das erste Flächenelement weist wenigstens eine erste Öffnung auf und das zweite Flächenelement weist wenigstens eine zweite Öffnung auf. Die Ventilelemente sind relativ zueinander in der wenigstens einen Richtung parallel zu der Anlagefläche in wenigstens eine erste Position, in der die wenigstens eine Öffnung und die wenigstens eine zweite Öffnung miteinander in Fluidverbindung stehen, und wenigstens eine zweite Position, in der die wenigstens eine erste Öffnung und die wenigstens eine zweite Öffnung nicht miteinander in Fluidverbindung stehen, bewegbar.

DE 10 2011 088 678 A1 offenbart eine Ventilanordnung für die Verteilung und Mischung von Flüssigkeiten in einem Analysegerät zur automatisierten Bestimmung einer Messgröße einer Messflüssigkeit. Die Ventilanordnung umfasst eine erste Keramikscheibe und eine an einer Auflagefläche der ersten Keramikscheibe anliegende zweite Keramikscheibe. Des Weiteren umfasst die Ventilanordnung ein Ventil, welches gebildet ist durch einen in die Auflagefläche der ersten Keramikscheibe eingeschnittenen Kanal, und mindestens zwei dem Kanal zugeordnete Durchgangsbohrungen in der zweiten Keramikscheibe, die in einer durch eine Relativbewegung zwischen der ersten und der zweiten Keramikscheibe einstellbaren Ventilstellung über den Kanal miteinander verbunden sind.

CN 205 155 248 U offenbart einen Wasserhahn mit Ozon-Wasseraufbereitung mit einer Einlassöffnung für öffentliches Wasser und einer weiteren Einlassöffnung für gereinigtes Wasser. Die beiden Einlassöffnungen können wahlweise durch eine Drehbewegung eines Gehäuseteils mit dem Auslass in Verbindung gebracht werden.

DE 10 2007 059 651 A1 offenbart einen Probengeber für Hochleistungsflüssigkeitschromatographie mit einem Hochdruck-Injektionsventil mit einer Beschaltung, die so festgelegt ist, dass Schaltvorgänge nicht in einer die Lebensdauer reduzierenden Richtung erfolgen. Nuten im Rotor und/oder Port-Öffnungsquerschnitte im Stator und die Drehrichtung sind so gewählt, dass Fluidströmungen von unter Hochdruck stehenden Nuten in Richtung auf enge, im Wesentlichen drucklose Ports vermieden werden. Vor diesem Hintergrund ist es eine Aufgabe der vorliegenden Erfindung, eine mobile Wasseraufbereitungsanlage anzugeben, die die besonderen und zum Teil gegensätzlichen Anforderungen an eine solche Anlage in möglichst effizienter Weise erfüllt. Es ist insbesondere eine Aufgabe, eine mobile Wasseraufbereitungsanlage anzugeben, die auf prozesssichere und kostengünstige Weise einen Betrieb ermöglicht, der wahlweise permeatgestuft oder konzentratgestuft ist..

Gemäß einem Aspekt der Erfindung wird zur Lösung dieser Aufgaben eine mobile Wasseraufbereitungsanlage zum Erzeugen von Trinkwasser in einem Katastrophengebiet vorgeschlagen, mit einem ersten Umkehrosmosemodul und einem zweiten Umkehrosmosemodul, und mit einem Umschaltventil zum Umschalten zwischen einem permeatgestuften Betrieb und einem konzentratgestuften Betrieb, mit einem Ventilgehäuse, das ein erstes Gehäuseteil und ein zweites Gehäuseteil besitzt, wobei das erste Gehäuseteil eine Vielzahl von Anschlussöffnungen aufweist, die zum Anschließen von Fluidleitungen ausgebildet sind, wobei das zweite Gehäuseteil eine Vielzahl von Kanälen aufweist, die dazu ausgebildet sind, definierte Anschlussöffnungen aus der Vielzahl von Anschlussöffnungen fluidleitend miteinander zu verbinden, und wobei das erste Gehäuseteil und das zweite Gehäuseteil räumlich verstellbar zueinander gehalten sind und eine erste Stellposition und eine zweite Stellposition definieren, wobei die Kanäle in Abhängigkeit von der jeweiligen Stellposition unterschiedliche Anschlussöffnungen aus der Vielzahl von Anschlussöffnungen fluidleitend miteinander verbinden.

Vorzugsweise verbinden ein oder mehrere Kanäle im zweiten Gehäuseteil Anschlussöffnungen im ersten Gehäuseteil in Abhängigkeit von der jeweiligen Stellposition paarweise. Des Weiteren ist es in einigen Ausführungsbeispielen bevorzugt, wenn das erste Gehäuseteil und das zweite Gehäuseteil relativ zueinander verdreht werden können, vorzugsweise um 90°, um zwischen einer ersten definierten Drehposition und einer zweiten definierten Drehposition als jeweilige Stellposition umzuschalten. Prinzipiell sind jedoch auch mehr als zwei alternative Drehpositionen und/oder andere Drehwinkel zwischen den Drehpositionen denkbar. Des Weiteren ist es in einigen Ausführungsbeispielen bevorzugt, wenn das erste Gehäuseteil und das zweite Gehäuseteil entlang einer Stellachse translatorisch zueinander verstellt werden können. Vorzugsweise sind die Gehäuseteile so aneinander gehalten, dass eine Verstellung von der ersten Stellposition zur zweiten Stellposition oder umgekehrt möglich ist, während die beiden Gehäuseteile mechanisch miteinander gekoppelt sind. Prinzipiell ist es jedoch auch denkbar, dass die Gehäuseteile vollständig voneinander gelöst und in der jeweils gewünschten Stellposition miteinander verbunden werden können. Beispielsweise kann das zweite Gehäuseteil in einigen Ausführungsbeispielen vollständig von dem ersten Gehäuseteil gelöst werden (abgenommen werden) und anschließend in einer um einen Drehwinkel verdrehten Position wieder auf das erste Gehäuseteil aufgesetzt werden.

Das Umschaltventil kann sehr einfach und kostengünstig hergestellt werden und ermöglicht eine prozesssichere Umschaltung zwischen einem permeatgestuften und einem konzentratgestuften Betrieb in einer mehrstufigen Umkehrosmoseanlage, wie nachfolgend anhand eines bevorzugten Ausführungsbeispiels im Detail dargelegt wird.

Die Umschaltung wird bei dem Umschaltventil durch Verdrehen und/oder Verschieben des einen Gehäuseteils relativ zu dem anderen Gehäuseteil erreicht. In einigen bevorzugten Ausführungsbeispielen ist das erste Gehäuseteil mit den Anschlussöffnungen drehfest in der Wasseraufbereitungsanlage montiert und das zweite Gehäuseteil ist an dem ersten Gehäuseteil drehbar gehalten. Die Verdrehung von zwei Gehäuseteilen gegeneinander ermöglicht eine sehr kompakte, robuste und betriebssichere Realisierung. In anderen bevorzugten Ausführungsbeispielen ist das erste Gehäuseteil mit den Anschlussöffnungen in der Wasseraufbereitungsanlage fest montiert und das zweite Gehäuseteil ist an dem ersten Gehäuseteil verschiebbar gehalten In vorteilhaften Ausführungsbeispielen sind die Gehäuseteile jeweils aus einem massiven Materialblock hergestellt, in dem die Anschlussöffnungen bzw. die Kanäle als Bohrungen realisiert sind.

Das zweite Gehäuseteil besitzt definierte Durchgangskanäle. Vorzugsweise besitzt jeder Kanal im zweiten Gehäuseteil genau eine Eingangsöffnung und genau eine Ausgangsöffnung, so dass jeder Kanal im zweiten Gehäuseteil genau zwei Anschlussöffnungen des ersten Gehäuseteils miteinander verbinden kann. In bevorzugten Ausführungsbeispielen können die Kanäle aus fertigungstechnischen Gründen jeweils eine weitere Kanalöffnung an einer Außenseite des zweiten Gehäuseteils aufweisen, wobei diese weiteren Kanalöffnungen im Anlagenbetrieb jeweils fest verschlossen und in Bezug auf die Umschaltfunktion des Ventils funktionslos sind. Die weiteren Kanalöffnungen erleichtern in diesem Fall die kostengünstige Herstellung des Umschaltventils, wenn die Kanäle als einfache Bohrungen in einem massiven Materialblock hergestellt werden. Prinzipiell können die Kanäle jedoch auch mit einem 3D-Druckverfahren und/oder mit Hilfe von Schlauchleitungen und/oder Rohren realisiert sein.

Externe Leitungen, die Rohwasser, Permeat und/oder Konzentrat der neuen Wasseraufbereitungsanlage zu dem Umschaltventil hinführen oder von dem Umschaltventil abführen, sind vorzugsweise fluiddicht mit den Anschlussöffnungen des Umschaltventils verbunden. In Abhängigkeit von der jeweiligen Stellposition des zweiten Gehäuseteils relativ zu dem ersten Gehäuseteil verbinden ein oder mehrere Kanäle in dem zweiten Gehäuseteil ausgewählte Leitungen miteinander oder trennen sie voneinander. In einem bevorzugten Ausführungsbeispiel besitzt das Umschaltventil genau vier Anschlussöffnungen am ersten Gehäuseteil, wobei eine erste Anschlussöffnung mit einem Permeatausgang eines ersten Umkehrosmosemoduls verbunden ist, wobei eine zweite Anschlussöffnung mit einem Permeatausgang eines zweiten Umkehrosmosemoduls verbunden ist, wobei eine dritte Anschlussöffnung mit einem Rohwasserzulauf des zweiten Umkehrosmosemoduls verbunden ist, und wobei die vierte Anschlussöffnung mit dem Konzentratausgang des ersten Umkehrosmosemoduls verbunden ist. Wie nachfolgend dargelegt wird, kann das Umschalten zwischen dem permeatgestuften Betrieb und dem konzentratgestuften Betrieb in einem solchen Ausführungsbeispiel sehr einfach und schnell mit einem zentralen Stellorgan erfolgen.

Bei dem Umschaltventil sind vorzugsweise alle Anschlussöffnungen im ersten Gehäuseteil fluidmäßig voneinander getrennt. Wahlweise werden ausgewählte Anschlussöffnungen über die Kanäle im zweiten Gehäuseteil paarweise miteinander verbunden. Dies ermöglicht einen sehr prozesssicheren Betrieb. Die Verdrehung oder das Verschieben ganzer Gehäuseteile gegeneinander ermöglicht eine sehr robuste und zudem kostengünstige Realisierung. Angesichts dessen sind die oben genannten Aufgaben vollständig gelöst.

In einer bevorzugten Ausgestaltung weist das erste Gehäuseteil eine erste, vorzugsweise ebene, Kontaktfläche auf, in der die Anschlussöffnungen münden, und das zweite Gehäuseteil weist eine zweite, vorzugsweise ebene, Kontaktfläche auf, in der die Kanäle münden, wobei die zweite Kontaktfläche ausgewählte Anschlussöffnungen in Abhängigkeit von der jeweiligen Stellposition verschließt.

In dieser Ausgestaltung können einzelne Anschlussöffnungen im ersten Gehäuseteil von einem massiven Flächenabschnitt des zweiten Gehäuseteils abgedeckt und somit verschlossen werden. Dementsprechend liegen die erste und zweite Kontaktfläche im Betrieb des Umschaltventils aneinander an. Zum Verstellen können sie in einigen Ausführungsbeispielen voneinander abgehoben werden. Das Umschaltventil besitzt in dieser Ausgestaltung nicht allein die Fähigkeit, ausgewählte Fluidstrecken zu bilden/bereitzustellen, sondern darüber hinaus die Fähigkeit, ausgewählte Anschlussöffnungen in Abhängigkeit von der jeweiligen Stellposition vollständig zu verschließen. Damit reduziert diese Ausgestaltung das Risiko, dass Konzentrat unerwünscht in einen Permeatkanal oder eine Permeatleitung gelangen kann. Die Prozesssicherheit ist weiter erhöht.

In einer weiteren Ausgestaltung besitzt das Umschaltventil eine Anzahl von Nuten, die in zumindest einer der genannten Kontaktflächen verlaufen und eine Vielzahl von Kontaktflächensegmenten definieren, wobei jeweils eine Anschlussöffnung in einem Flächensegment mündet. In bevorzugten Ausführungsbeispielen sind die Nuten in der Kontaktfläche des zweiten Gehäusemoduls angeordnet.

In dieser Ausgestaltung liegen die Anschlussöffnungen des ersten Gehäuseteils in voneinander getrennten Flächensegmenten, die durch Nuten definiert sind. Infolgedessen sind auch die Anschlussöffnungen im Betrieb des Umschaltventils durch die Nuten voneinander getrennt. Die Nuten bilden vorteilhafte Leckagekanäle, in denen sich Leckagewasser, insbesondere Permeat oder Konzentrat aus der Wasseraufbereitungsanlage, sammeln kann, falls im Bereich einer oder mehrerer Anschlussöffnungen eine Leckage auftreten sollte. In bevorzugten Ausführungsbeispielen erstrecken sich die Kanäle bis zu einer oder mehreren Gehäuseaußenseiten des Ventilgehäuses, so dass das Leckagewasser an der einen oder den mehreren Gehäuseaußenseiten aus den Nuten austreten kann. Dies hat den Vorteil, dass die Leckage von außen leicht erkennbar ist und ein defektes Umschaltventil zeitnah ausgetauscht oder repariert werden kann. Kontaminationen des Permeats lassen sich so leichter vermeiden.

In einer weiteren Ausgestaltung besitzt das Umschaltventil einen Spannmechanismus, der dazu eingerichtet ist, das erste Gehäuseteil und das zweite Gehäuseteil in einer jeweiligen Stellposition gegeneinander zu verspannen.

Ein solcher Spannmechanismus macht es möglich, den Anpressdruck, mit dem das erste und das zweite Gehäuseteil im Betrieb des Umschaltventils gegeneinander gepresst werden, zu verändern. Insbesondere ist es in dieser Ausgestaltung möglich, den Anpressdruck der Gehäuseteile relativ zueinander zu reduzieren, um das Verdrehen und/oder Verschieben zu erleichtern. Umgekehrt kann mit dem Spannmechanismus nach dem Verdrehen und/oder Verschieben ein hoher Anpressdruck erzeugt werden, der eine fluiddichte, leckagefreie Verbindung zwischen den Gehäuseteilen begünstigt. In einigen vorteilhaften Ausführungsbeispielen ist der Spannmechanismus dazu eingerichtet, eine Axialbewegung parallel zu einer Drehachse und/oder Verschiebeachse des zweiten Gehäuseteils relativ zu dem ersten Gehäuseteil zu bewirken, um die Gehäuseteile wahlweise gegeneinander zu verspannen oder voneinander zu lösen. Die Ausgestaltung erleichtert die Verstellbewegung des Umschaltventils und trägt zu einer hohen Prozesssicherheit bei.

In einer weiteren Ausgestaltung besitzt das Umschaltventil eine Vielzahl von Dichtringen, die an dem ersten Gehäuseteil und/oder an dem zweiten Gehäuseteil angeordnet sind und die dazu eingerichtet sind, die Anschlussöffnungen fluidmäßig voneinander zu separieren.

In vorteilhaften Ausführungsbeispielen ist jede Anschlussöffnung von jeweils zumindest einem Dichtring umgeben. Dementsprechend kann in jedem Flächensegment zumindest ein Dichtring angeordnet sein. Beispielsweise können die Dichtringe O-Ringe aus einem elastischen Material sein, die in komplementären Vertiefungen des ersten und/oder zweiten Gehäuseteils gehalten sind. In den bevorzugten Ausführungsbeispielen sind die Dichtringe an dem ersten Gehäuseteil gehalten, während die oben genannten Nuten an dem zweiten Gehäuseteil ausgebildet sind. Die Ausgestaltung verbessert die Trennung der verschiedenen Fluidströme und trägt vorteilhaft zu einer hohen Prozesssicherheit bei.

In einer weiteren Ausgestaltung besitzt das zweite Gehäuseteil einen plattenartigen Körper, in dem die Vielzahl von Kanälen ausgebildet sind.

In dieser Ausgestaltung beinhaltet das zweite Gehäuseteil einen massiven Körper, in den die Kanäle als Vertiefungen und/oder vorzugsweise innenliegende Bohrungen eingebracht sind. Dementsprechend verlaufen die Kanäle vorzugsweise im Inneren des zweiten Gehäuseteils und münden lediglich mit ihren Kanalöffnungen in der Kontaktfläche des zweiten Gehäuseteils. Die Kanäle sind in bevorzugten Ausführungsbeispielen als oder mit Hilfe von Bohrungen in den plattenartigen Körper eingebracht. Die Ausgestaltung ermöglicht eine sehr kostengünstige und robuste Realisierung.

In einer weiteren Ausgestaltung beinhaltet die Vielzahl von Anschlussöffnungen vier Anschlussöffnungen, von denen in der ersten Stellposition jeweils zwei Anschlussöffnungen paarweise durch einen jeweiligen Kanal aus der Vielzahl von Kanälen fluidleitend verbunden sind.

In dieser Ausgestaltung bilden die Kanäle in der ersten Stellposition zwei voneinander getrennte Fließpfade. Damit lässt sich eine häufig gewünschte Konzentratstufung von zwei Umkehrosmosemodulen auf sehr effiziente Weise realisieren. In den bevorzugten Ausführungsbeispielen besitzt das Umschaltventil genau vier Anschlussöffnungen, die in der ersten Stellposition genau zwei voneinander getrennte Fließpfade bilden.

In einer weiteren Ausgestaltung spannen drei der vier Anschlussöffnungen ein gleichschenkliges Dreieck auf und eine vierte Anschlussöffnung von den vier Anschlussöffnungen ist so angeordnet, dass sie voneinander verschiedene laterale Abstände zu mindestens zwei der drei genannten Anschlussöffnungen aufweist.

Das gleichschenklige Dreieck dieser Ausgestaltung ist in einer Draufsicht auf die erste Kontaktfläche erkennbar und hat zur Folge, dass eine erste Anschlussöffnung der drei genannten Anschlussöffnungen jeweils gleiche lateral Abstände zu der zweiten und der dritten Anschlussöffnung der drei genannten Anschlussöffnungen besitzt. Daher kann die erste Anschlussöffnung der drei genannten Anschlussöffnungen sehr einfach wahlweise mit der zweiten Anschlussöffnung oder mit der dritten Anschlussöffnung der drei genannten Anschlussöffnungen über einen Kanal in dem zweiten Gehäuseteil verbunden werden. Prinzipiell ist eine solche wahlweise Verbindung auch möglich, wenn die lateralen Abstände verschieden voneinander sind, aber die vorliegende Ausgestaltung ermöglicht eine sehr kompakte und besonders kostengünstige Realisierung. Vorzugsweise liegt die vierte Anschlussöffnung außerhalb des gleichschenkligen Dreiecks und es ist weiterhin bevorzugt, wenn die vierte Anschlussöffnung zusammen mit der ersten, zweiten und dritten Anschlussöffnung ein Viereck mit Außenseiten aufspannt, die zwei 90° Winkel, einen Winkel größer als 90° und einen weiteren Winkel kleiner als 90° definieren. Die vier Anschlussöffnungen spannen somit ein Viereck auf, das der schematischen Seitenansicht eines Hauses mit Pultdach entspricht. Eine solche Anordnung der vier Anschlussöffnungen ermöglicht eine sehr kompakte und kostengünstige Realisierung des Umschaltventils.

In einer weiteren Ausgestaltung beinhaltet die Vielzahl von Kanälen zwei Kanäle, die parallel zueinander und parallel zu einer von den Anschlussöffnungen aufgespannten Ebene verlaufen.

Auch diese Ausgestaltung trägt zu einer sehr kompakten und kostengünstigen Realisierung vorteilhaft bei.

In einer weiteren Ausgestaltung sind das erste Gehäuseteil und das zweite Gehäuseteil jeweils aus einem für Trinkwasser zugelassenen Material hergestellt.

Alternativ wäre beispielsweise eine trinkwassergeeignete Oberflächenbeschichtung derjenigen Gehäuseflächen denkbar, die mit dem Permeat in der Wasseraufbereitungsanlage Berührung kommen können. Diese bevorzugte Ausgestaltung erleichtert demgegenüber eine robuste und langlebige Realisierung.

In einer weiteren Ausgestaltung besitzt das Umschaltventil einen Führungsstift, der in einer Kulisse angeordnet ist und zusammen mit der Kulisse einen Umschaltweg zwischen der ersten Stellposition und der zweiten Stellposition definiert.

Diese Ausgestaltung trägt zu einem prozesssicheren und langlebigen Umschaltventil vorteilhaft bei, indem die Gefahr von Fehlbedienungen reduziert wird.

In einer weiteren Ausgestaltung der Wasseraufbereitungsanlage ist das Umschaltventil stromabwärts von dem ersten Umkehrosmosemodul und stromaufwärts von dem zweiten Umkehrosmosemodul angeordnet.

Diese Ausgestaltung ermöglicht die Umschaltung zwischen einem permeatgestuften Betrieb und einem konzentratgestuften Betrieb mit einer geringen Anzahl an Stellelementen und erleichtert daher eine kompakte Realisierung der neuen Wasseraufbereitungsanlage.

In einer weiteren Ausgestaltung besitzt die Wasseraufbereitungsanlage eine Druckerhöhungspumpe, die stromaufwärts von dem ersten Umkehrosmosemodul angeordnet ist. Vorzugsweise besitzt die Wasseraufbereitungsanlage eine gemeinsame Druckerhöhungspumpe für mehrere oder alle Umkehrosmosemodule, die stromabwärts von dem ersten Umkehrosmosemodul angeordnet sind.

In dieser Ausgestaltung kommt die neue Wasseraufbereitungsanlage vorteilhaft mit einer geringen Anzahl an Pumpen aus, was durch das Umschaltventil begünstigt wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine Seitenansicht auf ein Ausführungsbeispiel einer Wasseraufbereitungsanlage mit dem Umschaltventil,
- Fig. 2: ein Ausführungsbeispiel des Umschaltventils in einer Seitenansicht,
- Fig. 3: ein Gehäuseunterteil des Umschaltventils aus Fig. 2,
- Fig. 4: ein Gehäuseoberteil des Umschaltventils aus Fig. 2,
- Fig. 5: ein Fließschema, das die Wasseraufbereitungsanlage aus Fig. 1 in einem konzentratgestuften Betrieb zeigt, und
- Fig. 6: ein Fließschema, das die Funktionsweise der Wasseraufbereitungsanlage aus Fig. 1 in einem permeatgestuften Betrieb zeigt.

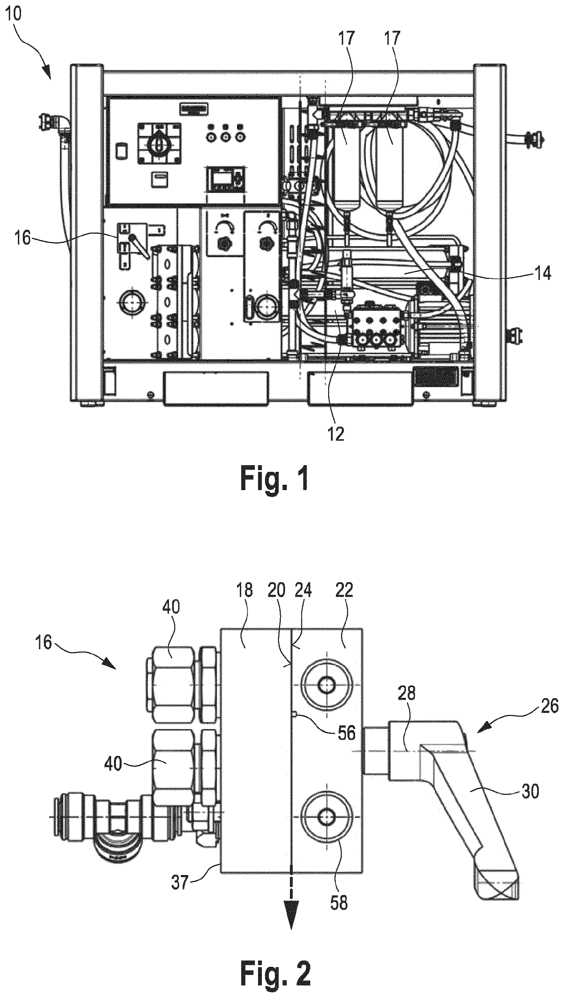

In den Fig. 1 ist ein Ausführungsbeispiel einer neuen Wasseraufbereitungsanlage in seiner Gesamtheit mit der Bezugsziffer 10 bezeichnet. Die Anlage 10 besitzt ein erstes Umkehrosmosemodul 12 und ein zweites Umkehrosmosemodul 14 sowie ein Umschaltventil 16, das auf einfache und robuste Weise eine Umschaltung zwischen einem konzentratgestuften Betrieb und einem permeatgestuften Betrieb ermöglicht. Darüber hinaus besitzt die Wasseraufbereitungsanlage hier zwei Vorfilter 17, wie sie beispielhaft in der eingangs genannten EP 1 690 579 A1 beschrieben sind.

Fig. 2 zeigt ein Ausführungsbeispiel des Umschaltventils 16 in einer Seitenansicht. Das Umschaltventil 16 besitzt ein erstes Gehäuseteil 18 mit einer ersten Kontaktfläche 20, ein zweites Gehäuseteil 22 mit einer zweiten Kontaktfläche 24 und einen Spannmechanismus 26, der es möglich macht, die Kontaktflächen 20, 24 wahlweise fest gegeneinander zu pressen oder den Anpressdruck zu reduzieren, um ein Verdrehen der Gehäuseteils 18, 22 relativ zueinander um eine Drehachse 28 zu ermöglichen. Im Folgenden wird das erste Gehäuseteil 18 ohne Einschränkung der Allgemeinheit als Gehäuseunterteil bezeichnet und das zweite Gehäuseteil 22 wird dementsprechend als Gehäuseoberteil bezeichnet.

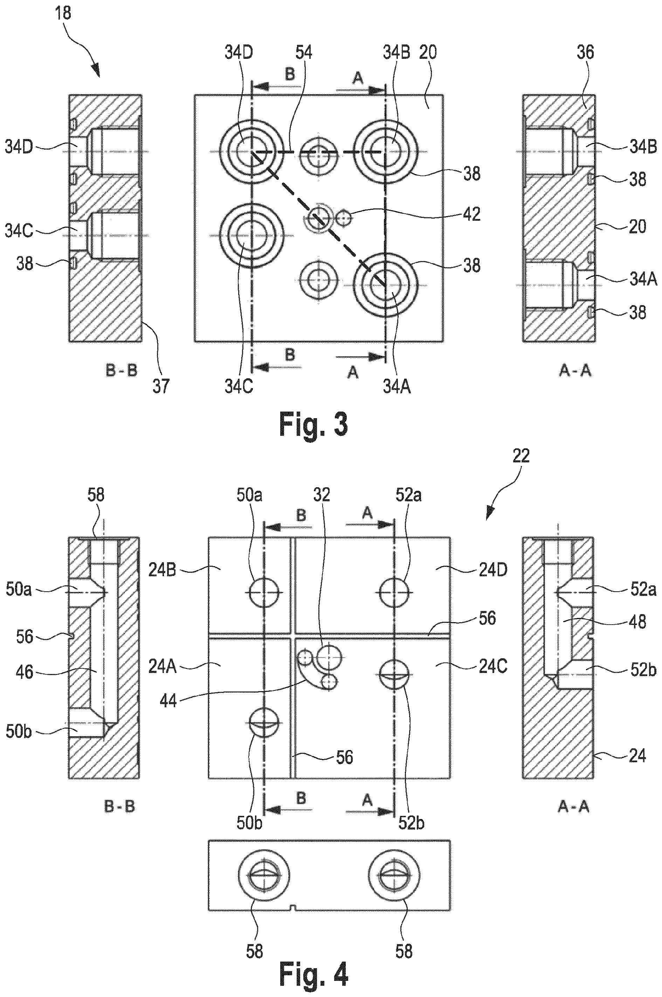

Wie man in Fig. 2 erkennen kann, beinhaltet der Spannmechanismus 26 in diesem Ausführungsbeispiel einen Spannhebel 30, der auf einer Achse 32 (siehe Fig. 4) sitzt. Die Achse 32 verläuft entlang der Drehachse 28 durch das Gehäuseoberteil 22 und hält das Gehäuseoberteil 22 an dem Gehäuseunterteil 18.

Fig. 3 zeigt in der Mitte eine Draufsicht auf die Kontaktfläche 20 des Gehäuseunterteils 18 sowie rechts und links davon jeweils einen Querschnitt durch das Gehäuseunterteil 18 entlang der Schnittebenen A-A bzw. B-B. In gleicher Weise zeigt Fig. 4 in der Mitte eine Draufsicht auf die Kontaktfläche 24 des Gehäuseoberteils 22 sowie rechts und links davon jeweils einen Querschnitt durch das Gehäuseoberteil 22 entlang der entsprechenden Schnittebenen A-A bzw. B-B. Gleiche Bezugszeichen bezeichnen dieselben Elemente wie zuvor.

Wie man in Fig. 3 erkennen kann, weist das Gehäuseunterteil 18 in diesem Ausführungsbeispiel vier Anschlussöffnungen 34A, 34B, 34C, 34D auf, die hier jeweils als gestufte Durchgangsbohrungen in einen massiven Körper 36 eingebracht sind. Der Öffnungsdurchmesser der gestuften Durchgangsbohrungen ist im Bereich der Kontaktfläche 20 kleiner als im Bereich der von der Kontaktfläche 20 abgewandten Rückseite 37 des Gehäuseunterteils 18. Um jede der vier Anschlussöffnungen 34A, 34B, 34C, 34D ist hier jeweils konzentrisch ein Dichtring 38 angeordnet. An der Rückseite 37 ist in jede der vier Anschlussöffnungen 34A, 34B, 34C, 34D ein Anschlussstück 40 zum Befestigen von jeweils einer Rohr- oder Schlauchleitung eingeschraubt (Fig. 2).

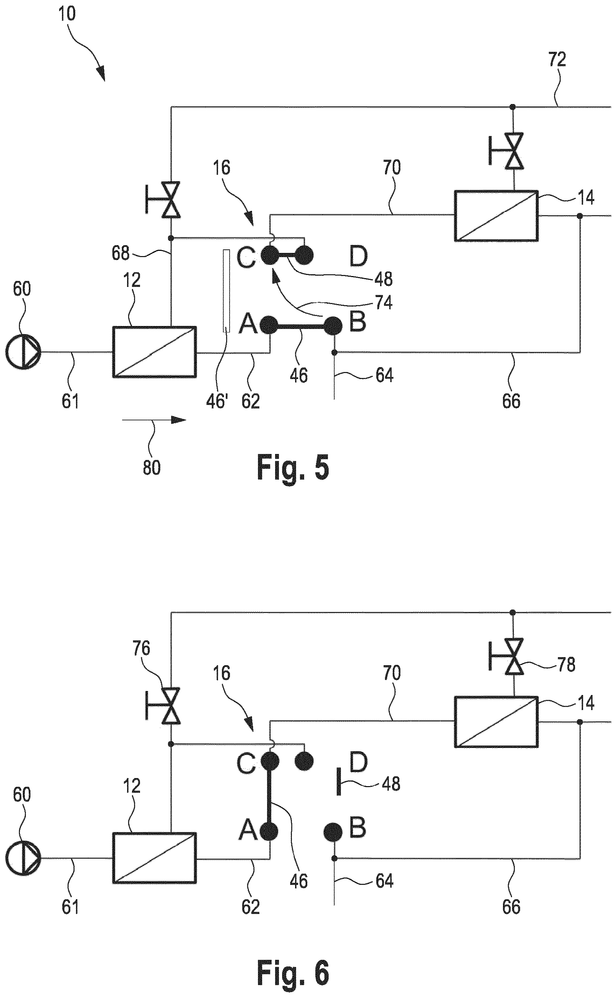

In Bereich der Mitte des in diesem Fall weitgehend quadratischen Gehäuseunterteils 18, jedoch seitlich neben der Aufnahme für die Achse 32 ist ein Führungsstift 42 angeordnet, der im Betrieb des Umschaltventils in eine Kulisse 44 im Gehäuseoberteil 22 eingreift und dort geführt ist. Der Führungsstift 42 und die Kulisse 44 definieren einen Umschaltweg zwischen einer ersten Drehposition und einer alternativen zweiten Drehposition des Gehäuseoberteils 22 relativ zu dem Gehäuseunterteil 18, wie nachfolgend unter Bezugnahme auf die Figuren 5 und 6 noch erläutert wird.

Wie man in Fig. 4 erkennen kann, weist das Gehäuseoberteil 22 in diesem Ausführungsbeispiel zwei innenliegende Kanäle 46, 48 auf. Jeder der beiden Kanäle 46, 48 besitzt in diesem Ausführungsbeispiel zwei Kanalöffnungen 50a, 50b bzw. 52a, 52b. Die Kanalöffnungen 50a, 50b, 52a, 52b münden in der zweiten Kontaktfläche 24 und sind hier so zueinander angeordnet, dass sie mit den Anschlussöffnungen 34A bis 34D jeweils paarweise fluchten, wenn sich die beiden Gehäuseteile 18, 22 in einer der Drehpositionen befinden. In diesem Ausführungsbeispiel fluchtet beispielsweise die Kanalöffnung 50a mit der Anschlussöffnung 34B und die Kanalöffnung 50b fluchtet mit der Anschlussöffnung 34A, wenn sich die beiden Gehäuseteile 18, 22 in der ersten Drehposition befinden. Des Weiteren fluchten in diesem Fall die Kanalöffnung 52a mit der Anschlussöffnung 34D und die Kanalöffnung 52b mit der Anschlussöffnung 34C. Die Kanäle 46, 48 erzeugen in diesem Fall ein Fließschema, wie es in Fig. 5 dargestellt ist.

Wie man in Fig. 4 weiter erkennen kann, ist der laterale Abstand zwischen den Kanalöffnungen 50a, 50b größer als der laterale Abstand zwischen den Kanalöffnungen 52a, 52b. Hingegen ist der laterale Abstand zwischen den Kanalöffnungen 50a, 50b in diesem Ausführungsbeispiel weitgehend gleich zu dem lateralen Abstand zwischen den Kanalöffnungen 50a, 52a. Die Kanalöffnungen 50a, 50b, 52a spannen somit ein weitgehend gleichschenkliges Dreieck in der Draufsicht auf die Kontaktfläche 24 auf, wobei die Kanalöffnung 50a die Spitze des gleichschenkligen Dreiecks bildet. In gleicher Weise spannen die Anschlussöffnungen 34A, 34B, 34D in Draufsicht auf die Kontaktfläche 20 des Gehäuseunterteils 18 ein kongruentes, gleichschenkliges Dreieck auf, das in Fig. 3 bei der Bezugsziffer 54 angedeutet ist. Infolgedessen kann die Kanalöffnung 50b mit der Anschlussöffnung 34B fluchten und die Kanalöffnung 50a kann mit der Anschlussöffnung 34D fluchten, wenn sich die beiden Gehäuseteile 18, 22 in der alternativen zweiten Drehposition befinden. Hingegen fluchten die Anschlussöffnungen 34A, 34C in diesem Fall nicht mit den Kanalöffnungen 52a, 52b. Daher erzeugt in diesem Fall nur der Kanal 46 eine Verbindung zwischen den Anschlussöffnungen 34B, 34D, während der Kanal 48 keine Verbindung herstellt. Ein entsprechendes Fließschema ist in Fig. 6 dargestellt.

Wie man in Fig. 4 außerdem erkennen kann, sind in der Kontaktfläche 24 hier zwei kreuzförmig zueinander verlaufende Nuten 56 angeordnet, die die Kontaktfläche 24 in vier Flächensegmente 24A, 24B, 24C, 24D unterteilen. In diesem Ausführungsbeispiel erstrecken sich die Nuten 56 in zwei zueinander orthogonalen Richtungen über die jeweils gesamte Länge der Kontaktfläche 24, so dass die Nuten jeweils an den Seitenflächen des Gehäuseoberteils münden. Dementsprechend sind man beispielsweise in Fig. 2 eine der Nuten 56 als kleine seitliche Öffnung in dem zweiteiligen Gehäuse des Umschaltventils 16. Die Nuten 56 sorgen dafür, dass etwaiges (unerwünschtes) Leckagewasser aus den Anschlussöffnungen 34A, 34B, 34C, 34D oder einer anderen Leckage nach außen aus dem Umschaltventil 16 austreten kann, wie hier mit einem Pfeil dargestellt ist. Eine Leckage im Inneren des Umschaltventils 16 ist daher schnell und einfach erkennbar. Darüber hinaus tragen die Nuten 56 dazu bei, dass die Anschlussöffnungen 34A, 34B, 34C, 34D auch im Fall einer Leckage fluidmäßig voneinander getrennt sind, da jede Anschlussöffnung 34A, 34B, 34C, 34D hier in einem separaten Flächensegment angeordnet ist.

In Fig. 2 und Fig. 4 sind des Weiteren zwei Verschlussstopfen 58 dargestellt, mit denen die Bohrlöcher bzw. seitlichen Eintrittsöffnungen in die Kanäle 46, 48 an der Seite des Gehäuseoberteils 22 verschlossen sind. Die Verschlussstopfen 58 erleichtern die Herstellung der Kanäle 46, 48, wenn das Gehäuseoberteil 22 aus einem massiven Materialkörper hergestellt wird. Wenn das Gehäuseoberteil 22 hingegen mit einem 3D-Druckverfahren hergestellt wird, können die Eintrittsöffnungen und Verschlussstopfen entfallen, wie die einschlägigen Fachleute ohne Weiteres erkennen werden.

Fig. 5 zeigt die Wasseraufbereitungsanlage 10 mit dem Umschaltventil 16 schematisch in einem konzentratgestuften Betrieb. Dabei bezeichnen gleiche Bezugszeichen dieselben Elemente wie zuvor. Stromaufwärts von dem ersten Umkehrosmosemodul 12 ist hier eine Pumpe 60 angeordnet, die Rohwasser in einer Rohwasserspeiseleitung 61 unter einen Druck setzt, der eine Umkehrosmose sowohl in dem ersten Umkehrosmosemodul 12 als auch in dem nachfolgenden Umkehrosmosemodul 14 ermöglicht. Alternativ hierzu wäre es in anderen Ausführungsbeispielen möglich, weitere Druckerhöhungspumpen zu verwenden und beispielsweise jeweils eine Pumpe 60 stromaufwärts von dem Rohwassereingang eines jeden Umkehrosmosemoduls 12, 14 anzuordnen.

In dem konzentratgestuften Betrieb gemäß Fig. 5 wird das Permeat aus dem ersten Umkehrosmosemodul 12 über eine Leitung 62 und den Kanal 46 im Umschaltventil 16 zu einer Sammelleitung 64 geführt. Die Sammelleitung 64 ist ferner über eine Leitung 66 mit dem Permeatausgang des zweiten Umkehrosmosemoduls 14 verbunden und nimmt auch das Permeat aus dem zweiten Umkehrosmosemodul 14 auf.. Das Konzentrat aus dem ersten Umkehrosmosemodul 12 wird über eine Leitung 68, den Kanal 48 im Umschaltventil 16 sowie eine Leitung 70 zu dem Rohwassereingang (Feed) des zweiten Umkehrosmosemoduls 14 geführt. Das Umkehrosmosemodul 14 erzeugt aus dem Konzentrat des ersten Umkehrosmosemoduls 12 nochmals Permeat und führt dieses über die Leitung 66 in die Sammelleitung 64. In diesem Betrieb wird also eine höhere Permeatmenge aus dem Rohwasser in der Leitung 62 erzeugt. Das Konzentrat aus dem zweiten Umkehrosmosemodul 14 kann über eine weitere Leitung 72 als Abwasser abgeführt werden oder in weiteren Ausführungsbeispielen einem weiteren Umkehrosmosemodul (hier nicht dargestellt) zugeführt werden.

Soll die Trinkwasseraufbereitung hingegen mit einer höheren Trinkwasserqualität (Reinheit) erfolgen, können die Kanäle 46, 48 in dem Umschaltventil 16 durch eine Drehbewegung des zweiten Gehäuseteils 22 relativ zu dem ersten Gehäuseteil 18 in die in Fig. 6 dargestellte Drehposition gebracht werden. Die Drehbewegung ist in Fig. 5 mit einem Pfeil 74 angedeutet. In diesem Fall wird das Permeat aus dem ersten Umkehrosmosemodul 12 über die Leitung 62, den Kanal 46 und die Leitung 70 dem Rohwassereingang (Feed) des zweiten Umkehrosmosemoduls 14 zugeführt und somit ein zweites Mal einer Umkehrosmose unterzogen. Vorteilhaft wird das Konzentrat aus dem ersten Umkehrosmosemodul 12 über ein in diesem Fall geöffnetes Regelventil 76 direkt in die Abwasserleitung 72 geführt. Das Regelventil 76 sowie ein weiteres Regelventil 78 am Konzentratausgang des zweiten Umkehrosmosemoduls 14 sind vorzugsweise Nadelventile, über die Betriebsdrücke in den Membranstufen geregelt werden. Im konzentratgestuften Betrieb gemäß Fig. 5 ist das Regelventil 76 vorzugsweise vollständig geschlossen und der Betriebsdruck und damit der Permeatvolumenstrom wird über das Ventil 78 geregelt. Im permeatgestuften Betrieb gemäß Fig. 6 erfolgt die Druckregelung vorzugsweise über beide Ventile.

Alternativ oder ergänzend zu diesem Ausführungsbeispiel, in dem die Gehäuseteile 18, 22 relativ zueinander verdrehbar sind, ist es prinzipiell möglich, das Umschaltventil 16 mit zwei relativ zueinander verschiebbaren Gehäuseteilen auszubilden. Vereinfacht ist in Fig. 5 bei der Bezugsziffer 46' ein Kanal angedeutet, der durch eine Translationsbewegung entlang einer Stellachse 80 in eine Stellposition gebracht werden kann, wie sie der Kanal 46 in Fig. 6 einnimmt. In dieser Position, d.h. nach einer Verschiebung, haben die in Fig. 5 dargestellten Kanäle 46 und 48 keine Verbindung mehr zu einer der Anschlussöffnungen. Fluidtechnisch ergibt sich dann ein Zustand, wie er in Fig. 6 dargestellt ist.

## Patentansprüche

1. Mobile Wasseraufbereitungsanlage zum Erzeugen von Trinkwasser in einem Katastrophengebiet, mit einem ersten und einem zweiten Umkehrosmosemodul (12, 14), und mit einem Umschaltventil (16), das dazu eingerichtet ist, das erste Umkehrosmosemodul (12) und das zweite Umkehrosmosemodul (14) wahlweise für einen permeatgestuften Betrieb oder für einen konzentratgestuften Betrieb miteinander zu verbinden, wobei das Umschaltventil ein Ventilgehäuse aufweist, das ein erstes Gehäuseteil (18) und ein zweites Gehäuseteil (22) besitzt, wobei das erste Gehäuseteil (18) eine Vielzahl von Anschlussöffnungen (34A, 34B, 34C, 34D) aufweist, die zum Anschließen von Fluidleitungen (62, 64, 68, 70) ausgebildet sind, wobei das zweite Gehäuseteil (22) eine Vielzahl von Kanälen (46, 48) aufweist, die dazu ausgebildet sind, definierte Anschlussöffnungen (34A, 34B, 34C, 34D) aus der Vielzahl von Anschlussöffnungen fluidleitend miteinander zu verbinden, und wobei das erste Gehäuseteil (18) und das zweite Gehäuseteil (22) räumlich verstellbar zueinander gehalten sind und eine erste Stellposition und eine zweite Stellposition definieren, wobei die Kanäle (46, 48) in Abhängigkeit von der jeweiligen Stellposition unterschiedliche Anschlussöffnungen aus der Vielzahl von Anschlussöffnungen (34A, 34B, 34C, 34D) fluidleitend miteinander verbinden.

2. Mobile Wasseraufbereitungsanlage nach Anspruch 1, wobei das erste Gehäuseteil (18) eine erste Kontaktfläche (20) aufweist, in der die Anschlussöffnungen münden, wobei das zweite Gehäuseteil (22) eine zweite Kontaktfläche (24) aufweist, in der die Kanäle (46, 48) münden, und wobei die zweite Kontaktfläche (24) ausgewählte Anschlussöffnungen in Abhängigkeit von der jeweiligen Stellposition verschließt.

3. Mobile Wasseraufbereitungsanlage nach Anspruch 2, wobei das Umschaltventil ferner eine Anzahl von Nuten (56) aufweist, die in zumindest einer der genannten Kontaktflächen (24) verlaufen und eine Vielzahl von Kontaktflächensegmenten (24A, 24B, 24C, 24D) definieren, wobei jeweils eine Anschlussöffnung in einem Flächensegment mündet.

4. Mobile Wasseraufbereitungsanlage nach einem der Ansprüche 1 bis 3, wobei das Umschaltventil ferner einen Spannmechanismus (26) aufweist, der dazu eingerichtet ist, das erste Gehäuseteil (18) und das zweite Gehäuseteil (22) in einer jeweiligen Stellposition gegeneinander zu verspannen.

5. Mobile Wasseraufbereitungsanlage nach einem der Ansprüche 1 bis 4, wobei das Umschaltventil ferner eine Vielzahl von Dichtringen (38) aufweist, die an dem ersten Gehäuseteil (18) und/oder dem zweiten Gehäuseteil (22) angeordnet sind und die dazu eingerichtet sind, die Anschlussöffnungen (34A, 34B, 34C, 34D) fluidmäßig voneinander zu separieren.

6. Mobile Wasseraufbereitungsanlage nach einem der Ansprüche 1 bis 5, wobei das zweite Gehäuseteil (22) einen plattenartigen Körper besitzt, in dem die Vielzahl von Kanälen (46, 48) ausgebildet sind.

7. Mobile Wasseraufbereitungsanlage nach einem der Ansprüche 1 bis 6, wobei die Vielzahl von Anschlussöffnungen (34A, 34B, 34C, 34D) vier Anschlussöffnungen beinhaltet, von denen in der ersten Stellposition jeweils zwei Anschlussöffnungen paarweise durch einen jeweiligen Kanal aus der Vielzahl von Kanälen (46, 48) fluidleitend verbunden sind.

8. Mobile Wasseraufbereitungsanlage nach Anspruch 7, wobei drei (34A, 34B, 34D) der vier Anschlussöffnungen ein gleichschenkliges Dreieck (54) aufspannen, und wobei eine vierte Anschlussöffnung (34C) von den vier Anschlussöffnungen so angeordnet ist, dass sie voneinander verschiedene laterale Abstände zu mindestens zwei der drei genannten Anschlussöffnungen aufweist.

9. Mobile Wasseraufbereitungsanlage nach einem der Ansprüche 1 bis 8, wobei die Vielzahl von Kanälen (46, 48) zwei Kanäle beinhaltet, die parallel zueinander und parallel zu einer von den Anschlussöffnungen (34A, 34B, 34C, 34D) aufgespannten Ebene verlaufen.

10. Mobile Wasseraufbereitungsanlage nach einem der Ansprüche 1 bis 9, wobei das erste Gehäuseteil (18) und das zweite Gehäuseteil (22) jeweils aus einem für Trinkwasser zugelassenen Material hergestellt sind.

11. Mobile Wasseraufbereitungsanlage nach einem der Ansprüche 1 bis 10, ferner mit einem Führungsstift (42), der in einer Kulisse (44) angeordnet ist und zusammen mit der Kulisse (44) einen Umschaltweg zwischen der ersten Stellposition und der zweiten Stellposition definiert.

12. Mobile Wasseraufbereitungsanlage nach einem der Ansprüche 1 bis 11, wobei die erste Stellposition und die zweite Stellposition voneinander verschiedene Drehpositionen um eine Drehachse (28) sind.

13. Mobile Wasseraufbereitungsanlage nach einem der Ansprüche 1 bis 12, wobei die erste Stellposition und die zweite Stellposition voneinander verschiedene Stellpositionen entlang einer translatorischen Stellachse (80) sind

14. Mobile Wasseraufbereitungsanlage nach einem der Ansprüche 1 bis 13, wobei das Umschaltventil (16) stromabwärts von dem ersten Umkehrosmosemodul (12) und stromaufwärts von dem zweiten Umkehrosmosemodul (14) angeordnet ist.

## Claims

1. A mobile water treatment system for producing potable water in a disaster area, comprising first and second reverse osmosis modules (12, 14), and comprising a changeover valve (16) configured for selectively connecting the first reverse osmosis module (12) and the second reverse osmosis module (14) for permeate-stepped operation or for concentrate-stepped operation, wherein the changeover valve comprises a valve housing having a first housing part (18) and a second housing part (22), wherein the first housing part (18) has a plurality of port openings (34A, 34B, 34C, 34D) configured for connecting fluid lines (62, 64, 68, 70), wherein the second housing part (22) has a plurality of channels (46, 48) configured for interconnecting defined port openings (34A, 34B, 34C, 34D) from the plurality of port openings in a fluid-conducting manner, and wherein the first housing part (18) and the second housing part (22) are held spatially adjustable relative to one another and define a first setting position and a second setting position, wherein the channels (46, 48) connect different port openings from the plurality of port openings (34A, 34B, 34C, 34D) to one another in the fluid-conducting manner as a function of the respective setting position.

2. The mobile water treatment system according to claim 1, wherein the first housing part (18) has a first contact surface (20), in which the port openings open, wherein the second housing part (22) has a second contact surface (24), in which the channels (46, 48) open, and wherein the second contact surface (24) closes selected port openings as a function of the respective setting position.

3. The mobile water treatment system according to claim 2, wherein the changeover valve further comprises a number of grooves (56) extending in at least one of said contact surfaces (24) and defining a plurality of contact surface segments (24A, 24B, 24C, 24D), wherein one respective port opening opens in a respective surface segment.

4. The mobile water treatment system according to any one of claims 1 to 3, wherein the changeover valve further comprises a clamping mechanism (26) which is configured for clamping the first housing part (18) and the second housing part (22) against each other in a respective setting position.

5. The mobile water treatment system according to any one of claims 1 to 4, wherein the changeover valve further comprises a plurality of sealing rings (38) arranged on the first housing part (18) and/or the second housing part (22) and which are arranged to separate the port openings (34A, 34B, 34C, 34D) from each other with respect to fluid.

6. The mobile water treatment system according to any one of claims 1 to 5, wherein the second housing part (22) has a plate-like body in which the plurality of channels (46, 48) are formed.

7. The mobile water treatment system according to any one of claims 1 to 6, wherein the plurality of port openings (34A, 34B, 34C, 34D) comprises four port openings, of which two respective port openings are connected in pairs by a respective channel from the plurality of channels (46, 48) in a fluid-conducting manner in the first setting position.

8. The mobile water treatment system according to claim 7, wherein three (34A, 34B, 34D) of the four port openings span an isosceles triangle (54), and wherein a fourth port opening (34C) of the four port openings is arranged such that it has different lateral distances from at least two of said three port openings.

9. The mobile water treatment system according to any one of claims 1 to 8, wherein the plurality of channels (46, 48) comprises two channels running parallel to each other and parallel to a plane spanned by the port openings (34A, 34B, 34C, 34D).

10. The mobile water treatment system according to any one of claims 1 to 9, wherein the first housing part (18) and the second housing part (22) are each made of a material approved for drinking water.

11. The mobile water treatment system according to any one of claims 1 to 10, further comprising a guide pin (42) which is arranged in a link (44) and together with the link (44) defines a switching path between the first setting position and the second setting position.

12. The mobile water treatment system according to any one of claims 1 to 11, wherein the first setting position and the second setting position are different rotational positions from each other about an axis of rotation (28).

13. The mobile water treatment system according to any one of claims 1 to 12, wherein the first setting position and the second setting position are different setting positions from each other along a translatory adjustment axis (80).

14. The mobile water treatment system according to any one of claims 1 to 13, wherein the changeover valve (16) is arranged downstream of the first reverse osmosis module (12) and upstream of the second reverse osmosis module (14).

## Revendications

1. Station d'épuration des eaux mobile permettant de produire de l'eau potable dans une zone sinistrée, comportant un premier et un second module d'osmose inverse (12, 14), et comportant une soupape de commutation (16) qui est conçue pour relier entre eux le premier module d'osmose inverse (12) et le second module d'osmose inverse (14), au choix, pour un fonctionnement à niveaux de perméat ou pour un fonctionnement à niveaux de concentré, dans laquelle la soupape de commutation présente un boîtier de soupape qui possède une première partie de boîtier (18) et une seconde partie de boîtier (22), dans laquelle la première partie de boîtier (18) présente une pluralité d'ouvertures de raccordement (34A, 34B, 34C, 34D) qui sont réalisées pour raccorder des conduites de fluide (62, 64, 68, 70), dans laquelle la seconde partie de boîtier (22) présente une pluralité de canaux (46, 48) qui sont réalisés pour raccorder entre elles, de manière conductrice de fluide, des ouvertures de raccordement (34A, 34B, 34C, 34D) définies parmi la pluralité d'ouvertures de raccordement, et dans laquelle la première partie de boîtier (18) et la seconde partie de boîtier (22) sont maintenues de manière à pouvoir être réglées dans l'espace l'une par rapport à l'autre et définissent une première position de réglage et une seconde position de réglage, dans laquelle les canaux (46, 48) raccordent entre elles de manière fluidique différentes ouvertures de raccordement parmi la pluralité d'ouvertures de raccordement (34A, 34B, 34C, 34D) en fonction de la position de réglage respective.

2. Station d'épuration des eaux mobile selon la revendication 1, dans laquelle la première partie de boîtier (18) présente une première surface de contact (20) dans laquelle débouchent les ouvertures de raccordement, dans laquelle la seconde partie de boîtier (22) présente une seconde surface de contact (24) dans laquelle débouchent les canaux (46, 48), et dans laquelle la seconde surface de contact (24) ferme des ouvertures de raccordement choisies en fonction de la position de réglage respective.

3. Station d'épuration des eaux mobile selon la revendication 2, dans laquelle la soupape de commutation présente en outre un certain nombre de rainures (56) qui s'étendent dans au moins l'une desdites surfaces de contact (24) et définissent une pluralité de segments de surface de contact (24A, 24B, 24C, 24D), dans laquelle respectivement une ouverture de raccordement débouche dans un segment de surface.

4. Station d'épuration des eaux mobile selon l'une des revendications 1 à 3, dans laquelle la soupape de commutation présente en outre un mécanisme de serrage (26) qui est conçu pour serrer la première partie de boîtier (18) et la seconde partie de boîtier (22) l'une contre l'autre dans une position de réglage respective.

5. Station d'épuration des eaux mobile selon l'une des revendications 1 à 4, dans laquelle la soupape de commutation présente en outre une pluralité de bagues d'étanchéité (38) qui sont disposées sur la première partie de boîtier (18) et/ou sur la seconde partie de boîtier (22) et qui sont conçues pour séparer de manière fluidique les ouvertures de raccordement (34A, 34B, 34C, 34D) les unes des autres.

6. Station d'épuration des eaux mobile selon l'une des revendications 1 à 5, dans laquelle la seconde partie de boîtier (22) possède un corps en forme de plaque dans lequel est réalisée la pluralité de canaux (46, 48).

7. Station d'épuration des eaux mobile selon l'une des revendications 1 à 6, dans laquelle la pluralité d'ouvertures de raccordement (34A, 34B, 34C, 34D) contient quatre ouvertures de raccordement dont, dans la première position de réglage, respectivement deux ouvertures de raccordement sont reliées par paires d'une manière conductrice de fluide par un canal respectif parmi la pluralité de canaux (46, 48).

8. Station d'épuration des eaux mobile selon la revendication 7, dans laquelle trois (34A, 34B, 34D) des quatre ouvertures de raccordement dessinent un triangle isocèle (54), et dans laquelle une quatrième ouverture de raccordement (34C) parmi les quatre ouvertures de raccordement est disposée de sorte qu'elle présente des distances latérales différentes les unes des autres par rapport à au moins deux des trois ouvertures de raccordement.

9. Station d'épuration des eaux mobile selon l'une des revendications 1 à 8, dans laquelle la pluralité de canaux (46, 48) contient deux canaux qui s'étendent parallèlement l'un à l'autre et parallèlement à un plan dessiné par les ouvertures de raccordement (34A, 34B, 34C, 34D).

10. Station d'épuration des eaux mobile selon l'une des revendications 1 à 9, dans laquelle la première partie de boîtier (18) et la seconde partie de boîtier (22) sont respectivement fabriquées à partir d'un matériau autorisé pour l'eau potable.

11. Station d'épuration des eaux mobile selon l'une des revendications 1 à 10, comportant en outre une tige de guidage (42) qui est disposée dans une coulisse (44) et qui définit conjointement avec la coulisse (44) une voie de commutation entre la première position de réglage et la seconde position de réglage.

12. Station d'épuration des eaux mobile selon l'une des revendications 1 à 11, dans laquelle la première position de réglage et la seconde position de réglage sont des positions de rotation différentes l'une de l'autre autour d'un axe de rotation (28).

13. Station d'épuration des eaux mobile selon l'une des revendications 1 à 12, dans laquelle la première position de réglage et la seconde position de réglage sont des positions de réglage différentes l'une de l'autre le long d'un axe de réglage (80) en translation.

14. Station d'épuration des eaux mobile selon l'une des revendications 1 à 13, dans laquelle la soupape de commutation (16) est disposée en aval du premier module d'osmose inverse (12) et en amont du second module d'osmose inverse (14).
